# EUROPÄISCHE PATENTSCHRIFT

(11) **EP 0 855 207 B1**
(45) Veröffentlichungstag und Bekanntmachung des Hinweises auf die Patenterteilung: **27.11.2002**
(21) Anmeldenummer: 97118590.5
(22) Anmeldetag: 25.10.1997
(51) Int. Cl.: B01D 29/11, B01D 46/24

(54) **Filterelement**
Filter element
Elément de filtre

(30) Priorität: 28.01.1997 DE 19702908
(43) Veröffentlichungstag der Anmeldung: 29.07.1998
(73) Patentinhaber: Hydac Filtertechnik GmbH, 66280 Sulzbach/Saar (DE)
(72) Erfinder: Wnuk, Ralf, Dr.-Ing., 66450 Bexbach (DE); Winter, Martin, 66620 Nonnweiler (DE)
(74) Vertreter: Patentanwälte Bartels und Partner

(56) Entgegenhaltungen:
- DE-A- 3 111 532
- DE-A- 3 128 546
- DE-A- 4 312 705
- GB-A- 1 041 882

## Beschreibung

Die Erfindung betrifft ein Filterelement mit einem Stützrohr mit den Merkmalen des Oberbegriffes des Patentanspruches 1.

Durch die gattüngsgemäße DE 43 12 705 A1 ist ein rohrförmiges Filterelement zur Filtration von Fluiden mit einer gefalteten Filtermatte als Filtermaterial bekannt, deren beide einander zugewandten Enden mittels eines Klebstoffes in ihrer Lage fixiert sind, für den eine Seitenbegrenzung in Form eines Bettes vorgesehen ist. Das angesprochene Bett ist als ein Festlegeteil in der Art einer Wanne ausgebildet, wobei die einander zugewandten und abgebogenen Enden eines Streckmetallmantels, der die Filtermatte schützend umgibt, mit seinen Enden in das wannenförmige Bett mit eingreift und als Stützteil an den randseitigen Enden des Filtermaterials anliegt. Durch Ausgießen der Wanne mit einem geeigneten Klebstoff ist ein fester Verbund der Komponenten des Filterelementes erreicht. Diese bekannte Art der Verbindung ist aufwendig und mithin teuer in der Herstellung und insbesondere bei lang andauerndem Gebrauch ist ein Versagen des Klebstoffbettes nicht ausgeschlossen.

Es ist zwar schon vorgeschlagen worden, insbesondere bei einem Filtermaterial aus einem Edelstahlgewebe, die einander zugewandten randseitigen Enden stumpf oder über eine Rollnaht zu verschweißen; bei der derart hergestellten Schweißnaht kommt es aber häufig zu einer Vorschädigung des Filtermaterials, so daß bei den üblichen Wechselbeanspruchungen bei dahingehenden Filterelementen die Verbindungsstelle versagt und das Filterelement unbrauchbar werden läßt.

Durch die DE-OS 22 42 018 ist eine Filterkerze bekannt, die ein gelochtes Rohr aufweist, das von einem engmaschigen Drahtgewebe umwickelt ist. Zum Festlegen dieses Drahtgewebes auf dem gelochten Filterrohr sind einzelne Bindedrähte vorgesehen, deren freie Enden in endseitig des Rohres angeordneten Flanschen verankert sind und die das Drahtgewebe auf dem Rohr festhalten.

Ausgehend von diesem Stand der Technik liegt der Erfindung die Aufgabe zugrunde, ein Filterelement zu schaffen, bei dem die randseitigen Enden des Filtermaterials sicher und langandauernd miteinander verbunden sind, so daß die Standzeit des jeweiligen Filterelementes erhöht ist. Eine dahingehende Aufgabe löst ein Filterelement mit den Merkmalen des Anspruches 1.

Dadurch, daß gemäß dem kennzeichnenden Teil des Patentanspruches 1 das Stützteil aus einem Stützstab gebildet ist und daß das Festlegeteil aus einem Festlegedraht gebildet ist, der sich spiralförmig um das Filtermaterial mit dem Stützstab derart wickelt, daß diese mit einem vorgebbaren Anpreßdruck aneinandergehalten sind, ist ein schonender Verbund erreicht, bei dem der Festlegedraht das Filtermaterial auf den Stützstab drückt, der wiederum zumindest einen endseitigen Randbereich des Filtermaterials gegen das Stützrohr sichert.

Die beiden miteinander verbundenen randseitigen Enden des Filtermaterials sind um einen im Querschnitt kreisförmigen Stützstab herumgelegt, so daß das Filtermaterial insbesondere im Bereich der Verbundstelle bei den anstehenden Wechselbeanspruchungen nur gering beansprucht ist. Die in Abhängigkeit des Filtermaterials miteinander über eine Klebstoffverbindung oder eine Schweißverbindung aneinander festgelegten Enden werden mit Hilfe des jeweiligen Festlegeteils in Aufwickelrichtung auf den Stützstab gezogen und derart schonend auf diesem festgelegt. Der angesprochene Verbund läßt sich nicht nur dauerhaft, sondern auch kostengünstig herstellen.

Weitere vorteilhafte Ausgestaltungen sind Gegenstand der Unteransprüche.

Im folgenden wird das erfindungsgemäße Filterelement anhand eines Ausführungsbeispiels nach der Zeichnung näher erläutert.

Es zeigen:
- Fig.1: teilweise im Schnitt, teilweise in Ansicht eine Längsansicht des Filterelementes;
- Fig.2: einen Schnitt längs der Linie I - I in Fig.1.

Das Filterelement weist ein übliches zylindrisches Stützrohr 10 auf, das sich aus Längsrippen 12 zusammensetzt, die außenumfangsseitig und gegebenenfalls innenumfangsseitig von Umfangsringen 14 begrenzt sind. Diese Umfangsringe 14 können die Funktion einer Vorfiltrationsstufe haben. Sie können aber auch mit ihren Zwischenräumen untereinander ein höheres Maß an Durchlässigkeit haben, wobei dann die Filtration ausschließlich von einem Filtermaterial 16 vorgenommen wird. Das Filtermaterial 16 folgt im wesentlichen der Außenkontur der Umfangsringe 14 des Stützrohres 10 nach, so daß im wesentlichen durch das Filtermaterial 16 ein filternder zylindrischer Körper gegeben ist. Das Filtermaterial 16 besteht vorzugsweise aus einem schweißbaren Metallgewebe, insbesondere aus Edelstahl.

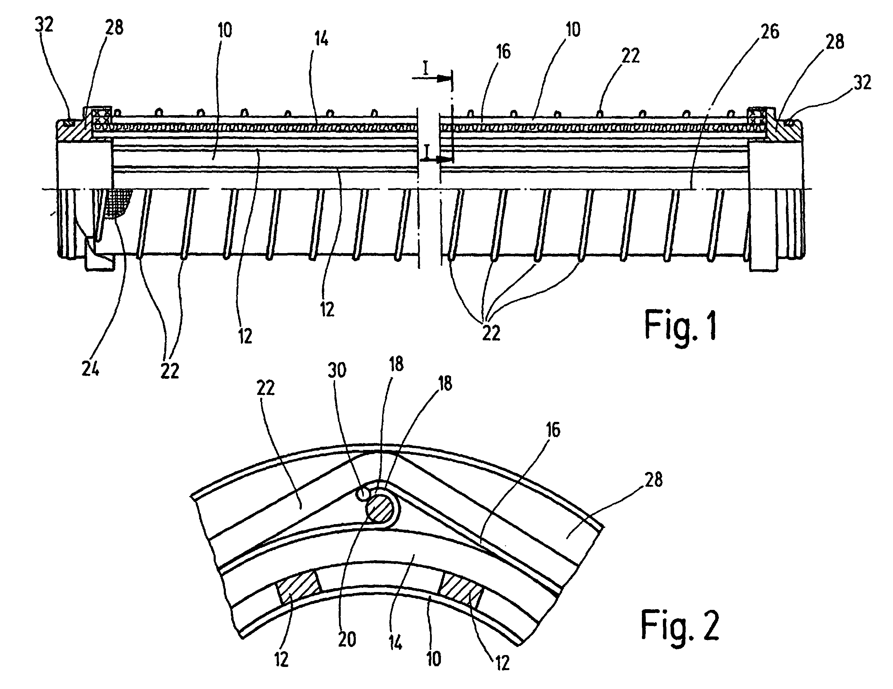

Wie insbesondere die Fig.2 zeigt, sind die randseitigen Enden 18 des Filtermaterials 16 um ein Stützteil 20 gelegt, wobei ein Festlegeteil 22 die randseitigen Enden 18 des Filtermaterials 16 sowie das Stützteil 20 in ihrer Lage längs des Stützrohres 10 positionieren. Der besseren Darstellung wegen ist in Blickrichtung auf die Fig.1 nur im Bereich eines Bildausschnittes 24 das Edelstahlgewebe mit seiner Filterfeinheit dargestellt, wobei sich das dahingehende Filtermaterial 16 entlang der gesamten Längsachse 26 des Filterelementes erstreckt, und zwar zwischen seinen beiden Abschlußkappen 28. Das Stützteil 20 ist aus einem im Querschnitt kreisrunden Metallstützstab gebildet, der endseitig in die beiden Abschlußkappen mündet. Das Festlegeteil 22 ist hingegen aus einem Festlegedraht mit kreisrundem Querschnitt gebildet, der sich spiralförmig in der Art einer Wendel um das Filtermaterial 16 mit dem Stützteil 20 derart wickelt, daß diese Komponenten mit einem vorgebbaren Anpreßdruck aneinandergehalten sind. Dabei ist die Wickelrichtung des Festlegedrahtes derart gewählt, daß in Umlegerichtung der randseitigen Enden 18 des Filtermaterials 16 diese auf das Stützteil 20 gepreßt sind. Das Festlegeteil 22 ist wiederum endseitig in die beiden Abschlußkappen 28 des Filterelementes mündend geführt.

Zum Herstellen des angesprochenen Verbundes werden die beiden benachbarten randseitigen Enden 18 des Filtermaterials 16 durch ein übliches Schweißverfahren verbunden, so daß eine homogene Schweißnaht 30 entsteht, die parallel zur Längsachse 26 des Filterelementes orientiert ist. In Blickrichtung auf die Fig.2 gesehen wird dann oberhalb des unteren Filtermattenbereiches des zylindrischen Filtermaterials 16 das Stützteil 20 in Form des Stützstabes angelegt, um den dann anschließend entgegen dem Uhrzeigersinn die über die Schweißnaht 30 miteinander verbundenen Enden des Filtermaterials 16 gelegt werden. Der untere Filtermattenbereich folgt dabei unmittelbar dem Außenumfang des Stützstabes 20 nach, wobei der Krümmungskreis derart gewählt ist, daß eine gute Krafteinleitung gewährleistet ist und den Verbund schädigende Wechselbeanspruchungen kompensiert werden. In Blickrichtung auf die Fig.2 gesehen befindet sich oberhalb des Stützteiles 20 dann zweilagig das Filtermaterial 16, wobei das obere Ende in einem spitzen Winkel in Richtung des Stützrohres 10 ausläuft und das Filtermaterial 16 umgibt dann zylindrisch die Umfangsringe 14 des Stützrohres 10. In einer in derselben Richtung wie die Umlegerichtung verlaufenden Wickelrichtung, also entgegen dem Uhrzeigersinn, wird in der Art einer Spirale das Festlegeteil 22 in Form des Festlegedrahtes um den angesprochenen Verbund gewickelt, wobei im Sinne einer Feder die einzelnen Wickellagen des Festlegedrahtes eine Federsteigung aufweisen. Die Anlage zwischen den beiden parallel verlaufenden randseitigen Enden 18 des Filtermaterials 16 und dem drahtförmigen Festlegeteil 22 erfolgt dabei linienförmig. Die voneinander abgewandten Enden von Stützrohr 10, Längsrippen 12, Filtermaterial 16, randseitigen Enden 18, Stützteil 20 sowie Festlegeteil 22 sind in zugeordneten Ausnehmungen in den Abschlußkappen 28 mit diesen über eine Klebstoffverbindung fest verbunden. In den Abschlußkappen außenumfangsseitig angeordnete Dichtringe 32 dienen dem abdichtenden späteren Einbau des Filterelementes in ein zugeordnetes Filtergehäuse. Die Abschlußkappen 28 weisen mittig durchgehende Ausnehmungen (nicht dargestellt) auf, über die das zu filtrierende Material zuführbar ist, wobei die Zufuhr auch über nur eine Abschlußkappe erfolgen kann. Das Filtermaterial 16 wird von seiten des Stützrohres 10 von innen nach außen durchströmt, wobei das Festlegeteil 22 eine Abstützung nach außen hin bildet und das Filtermaterial 16 in seiner Lage auf dem Stützrohr 10 positioniert.

Anstelle eines Edelstahlgewebes mit einer üblichen Durchlässigkeit von 5 - 25µm kann auch ein sonstiges Metallgewebe oder Metallvlies gesetzt werden, dessen randseitige Enden sich miteinander verschweißen oder verkleben lassen. Auch kann anstelle eines Metallfiltermaterials ein Kunststoffmaterial, insbesondere auch ein Vlies aus Kunststoffmaterial, treten, das schweißbar oder klebbar ist.

## Patentansprüche

1. Filterelement mit einem Stützrohr (10), um das ein Filtermaterial (16) angeordnet ist, dessen einander zugewandten randseitigen Enden (18) miteinander verbunden sind, wobei die randseitigen Enden (18) des Filtermaterials (16) um ein Stützteil (20) gelegt sind und wobei ein Festlegeteil (22) die randseitigen Enden (18) des Filtermaterials (16) sowie das Stützteil (20) in ihrer Lage längs des Stützrohres (10) positionieren, **dadurch gekennzeichnet, daß** das Stützteil (20) aus einem Stützstab gebildet ist und daß das Festlegeteil (22) aus einem Festlegedraht gebildet ist, der sich spiralförmig um das Filtermaterial (16) mit dem Stützstab derart wickelt, daß diese mit einem vorgebbaren Anpreßdruck aneinandergehalten sind.

2. Filterelement nach Anspruch 1, **dadurch gekennzeichnet, daß** das Filtermaterial (16) aus einem schweißbaren und/oder klebefähigen Material besteht und daß die randseitigen Enden (18) des Filtermaterials (16) über eine Schweißverbindung bzw. eine Klebeverbindung miteinander verbunden sind.

3. Filterelement nach Anspruch 2, **dadurch gekennzeichnet, daß** das Filtermaterial (16) aus einem Kunststoffgewebe oder aus einem Metallgewebe, insbesondere aus Edelstahl, besteht.

4. Filterelement nach einem der Ansprüche 1 bis 3, **dadurch gekennzeichnet, daß** der Stützstab endseitig in die beiden Abschlußkappen (28) des Filterelementes mündet.

5. Filterelement nach einem der Ansprüche 1 bis 4, **dadurch gekennzeichnet, daß** die Wickelrichtung des Festlegedrahtes derart ist, daß in Umlegerichtung der randseitigen Enden (18) des Filtermaterials (16) diese auf das Stützteil (20) gepreßt sind.

6. Filterelement nach Anspruch 4 oder 5, **dadurch gekennzeichnet, daß** das Festlegeteil (22) endseitig in die beiden Abschlußkappen (28) des Filterelementes mündet.

7. Filterelement nach einem der Ansprüche 1 bis 6, **dadurch gekennzeichnet, daß** das Festlegeteil (22) endseitig auf dem Stützrohr (10) befestigt ist.

8. Filtertelement nach einem der Ansprüche 1 bis 7, **dadurch gekennzeichnet, daß** das Stützteil (20) endseitig auf dem Stützrohr (10) befestigt ist.

## Claims

1. Filter element with a supporting tube (10) around which a filtering material (16) is arranged, its edge ends (18) which are turned towards each other being connected together, whereby the edge ends (18) of the filtering material (16) are laid around a supporting part (20) and whereby a locating part (22) positions the edge ends (18) of the filtering material (16) and the supporting part (20) in their position along the supporting tube (10), **characterised in that** the supporting part (20) is formed by a supporting rod and that the locating part (22) is formed by a hold-down wire wound round the filtering material (16) with the supporting rod like a spiral holding them against each other under a specific pressure.

2. Filter element according to Claim 1, **characterised in that** the filtering material (16) consists of a weldable and/or bondable material and that the edge ends (18) of the filtering material (16) are connected together by a welded joint or a bonded joint.

3. Filter element according to Claim 2, **characterised in that** the filtering material (16) consists of a plastic cloth or a wire mesh, in particular of stainless steel.

4. Filter element according to one of the Claims 1 to 3, **characterised in that** the ends of the supporting rod terminate in the two end caps (28) of the filter element.

5. Filter element according to one of the Claims 1 to 4, **characterised in that** the hold-down wire is wound in such a direction that the edge ends (18) of the filtering material (16) are pressed down onto the supporting part in the wrapping direction.

6. Filter element according to Claim 4 or 5, **characterised in that** the ends of the locating part (22) terminate in the two end caps (28) of the filter element.

7. Filter element according to one of the Claims 1 to 6, **characterised in that** the locating part (22) is attached at the end on the supporting tube (10).

8. Filter element according to one of the Claims 1 to 7, **characterised in that** the supporting part (20) is attached on the supporting tube (10).

## Revendications

1. Élément de filtre comprenant un tube de support (10), autour duquel est disposé un matériau filtrant (16), dont les extrémités latérales (18) face à face sont assemblées l'une à l'autre, dans lequel les extrémités latérales (18) du matériau filtrant (16) sont posées autour d'une pièce d'appui (20) et dans lequel un élément de serrage (22) est destiné à fixer les extrémités latérales (18) du matériau filtrant (16) ainsi que la pièce d'appui (20) dans leur position le long du tube de support (10), **caractérisé en ce que** la pièce d'appui (20) est formée par une tige d'appui et **en ce que** l'élément de serrage (22) est formé par un fil, qui est enroulé en forme de spirale autour du matériau filtrant (16) muni de la tige d'appui, de telle sorte que ceux-ci sont maintenus l'un contre l'autre avec une pression de serrage prédéfinissable.

2. Élément de filtre selon la revendication 1, **caractérisé en ce que** le matériau filtrant (16) est réalisé dans un matériau pouvant être soudé et/ou collé et **en ce que** les extrémités latérales (18) du matériau filtrant (16) sont assemblées l'une à l'autre par un assemblage soudé ou un assemblage collé.

3. Élément de filtre selon la revendication 2, **caractérisé en ce que** le matériau filtrant (16) est réalisé dans un tissu en matière synthétique ou dans un tissu de métal, en particulier un acier fin et spécial.

4. Élément de filtre selon une des revendications 1 à 3, **caractérisé en ce que** la tige d'appui débouche au niveau des extrémités dans les deux caches d'extrémité (28) de l'élément de filtre.

5. Élément de filtre selon une des revendications 1 à 4, **caractérisé en ce que** le sens d'enroulement du fil de serrage est défini de telle sorte que, dans le sens de rabattement des extrémités latérales (18) du matériau filtrant (16), celles-ci sont pressées sur la pièce d'appui (20).

6. Élément de filtre selon la revendication 4 ou 5, **caractérisé en ce que** l'élément de serrage (22) débouche au niveau des extrémités dans les deux caches d'extrémité (28) de l'élément de filtre.

7. Élément de filtre selon une des revendications 1 à 6, **caractérisé en ce que** l'élément de serrage (22) est fixé au niveau des extrémités sur le tube de support (10).

8. Élément de filtre selon une des revendications 1 à 7, **caractérisé en ce que** la pièce d'appui (20) est fixée au niveau des extrémités sur le tube de support (10).
